# EUROPEAN PATENT SPECIFICATION

(11) **EP 2 843 781 B1**
(45) Date of publication and mention of the grant of the patent: **20.03.2019**
(21) Application number: 13181973.2
(22) Date of filing: 28.08.2013
(51) Int. Cl.: H02B 1/38, E05C 9/02, E05C 9/22

(54) **Door locking means for an electrical switchboard cabinet**
Türverriegelungsmittel für einen elektrischen Schaltschrank
Fermeture de porte-moyens pour une armoire de distribution électrique

(43) Date of publication of application: 04.03.2015
(73) Proprietor: ABB S.p.A., 20124 Milano (IT)
(72) Inventor: Cagliani, Daniele, 23847 Molteno (LC) (IT); Coloca, Graziano, 23801 Calolziocorte (LC) (IT); Frattaruolo, Massimo, 20837 Veduggio con Colzano (MB) (IT); Proserpio, Simone Angelo, 22039 Valbrona (CO) (IT)
(74) Representative: Giavarini, Francesco

(56) References cited:
- DE-C1- 19 700 440
- JP-A- 2009 280 995
- US-A- 5 970 757

## Description

The present invention relates to a cabinet for an electrical switchboard.

As known, an electrical switchboard, such as a distribution or automation switchboard, comprises a cabinet having a frame which delimits an internal space for housing one or more electric or electronic elements and/or components of the switchboard.

For example, the frame of a low voltage distribution switchboard houses switching devices, e.g. circuit breakers, bus bars, control buttons, cable conduits, supporting guides, et cetera.

Generally, the frame comprises a substantially parallelepiped structure which is defined by frame members which are arranged substantially horizontally, commonly known as cross-members or rails, and by frame members which are arranged vertically and are commonly known as uprights.

The structure of the frame so realized constitutes a structural skeleton to which various components and/or accessories are operatively connected, such as the door for accessing the internal space of the cabinet.

The door of the cabinet comprises a locking mechanism which can be actuated for operatively interacting with one or more locking elements connected to a frame upright; such operative interaction provides the locking of the door in the closed position.

In known solutions, the locking mechanism and the corresponding locking elements are positioned between the frame upright to which the locking elements are connected and the inner surface of the door (i.e. the surface facing the internal space of the cabinet when the door is closed).

In practice, the locking mechanism is mounted on the inner surface of the door and the operatively interaction between it and the corresponding locking elements occurs in the space provided between the frame upright and the inner surface of the door.

In order to provide an adequate space for the locking mechanism and the corresponding locking elements, the frame upright is shaped to present a large cavity or a recess at its rear portion facing the inner surface of the closed door, and/or the thickness of the door is dimensioned large. These solutions for providing an adequate space have many disadvantages.

In particular, having a rear portion of the frame upright with a large cavity or recess implies a low mechanical sturdiness and resistance of the structure of the frame upright itself. A large thickness of the door means a waste of space and an increase in the production costs.

Further, a large distance between the frame upright and the inner surface of the closed door implies the use of an additional panel fixed internally to the door; this additional panel being used for placing a gasket between the frame upright and the door, in order to reach the required protection rating (generally indicated as IP Code or IP Rating).ù

Patent DE19700440 discloses a cabinet with a door which can be locked in a closed position by a holding element. The holding element can be actuated by an actuating element, in order to interact with locking elements. The locking elements cross the door, and the actuating and holding elements are mounted on the front side of the cabinet door.

In light of above, at the current state of the art, although known solutions perform in a rather satisfying way, there is still reason and desire for further improvements.

Such desire is fulfilled by a cabinet for an electrical switchboard, comprising:
- a frame delimiting an internal space of the cabinet;
- a door operatively connected to the frame, the door having a first surface facing the internal space when the door is in a closed position, and a second surface opposed to the first surface and facing the external of the cabinet;
- at least one locking element connected to the frame, the at least one locking element being adapted to pass through the door in the closed position by means of a corresponding opening extending between the first surface and the second surface;
- a mechanism which is adapted to be actuated for operatively interacting with the at least one locking element and locking the door in the closed position, the mechanism being operatively coupled to the second surface for operatively interacting with the at least one locking element when the door is in the closed position.

The mechanism comprises a movable rod which can be actuated between a locking position where the movable rod is adapted to operatively interact with the at least one locking element for locking the door in the closed position, and an unlocking position where the movable rod is disengaged from the at least one locking element.

The cabinet comprises a mounting structure which is operatively connected to the second surface and which is adapted to be operatively coupled to a handle for actuating the movable rod between the locking position and the unlocking position.

Another aspect of the present disclosure is to provide an electrical switchboard comprising a cabinet as the cabinet defined by the annexed claims and disclosed in the following description.

Further characteristics and advantages will be more apparent from the description of an exemplary, but non-exclusive, embodiments of a cabinet for an electrical switchboard according to the present invention, illustrated only for non-limitative exemplary purposes in the accompanying drawings, wherein:
- figure 1 is a perspective view which illustrates a cabinet frame and a detail of such frame;
- figure 2 is a perspective view which illustrates a cabinet according to the present invention, having a door which is hinged at a first side of the cabinet frame and which is in an open position;
- figure 3 is another perspective view of the cabinet of figure 2, wherein a lateral panel of the cabinet is removed, and wherein the door is hinged at a second side of the cabinet frame and is in a closed position;
- figure 4 is a front perspective view of a first exemplary door and related locking mechanism, which is adapted to be used in a cabinet according to the present invention;
- figure 5 is a rear perspective view of the first exemplary door illustrated in figure 4;
- figures 6-9 illustrate a mounting sequence of a cover on the outer surface of the first exemplary door illustrated in figure 4, wherein an upper portion of the cover has been cut;
- figures 10-15 are detail views of various components associated to the outer surface of the first exemplary door illustrated in figure 4, where such first exemplary door is coupled to a cabinet according to the present invention and it is in a closed position;
- figures 16 and 17 are a front perspective view and a rear perspective view, respectively, which illustrate the coupling of a handle with the first exemplary door illustrated in figure 4;
- figures 18 and 19 are a front perspective view and a rear perspective view, respectively, of a cover having various components connected thereto and adapted to be operatively coupled to a second exemplary door for a cabinet according to the present disclosure.

It should be noted that in the detailed description that follows, identical or similar components, either from a structural and/or functional point of view, have the same reference numerals, regardless of whether they are shown in different embodiments; it should also be noted that in order to clearly and concisely describe the present invention, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a whole combinations of components, or even to any part of a combination of components, it has to be understood that it means and encompasses correspondingly either the structure, and/or configuration and/or form and/or positioning of the related component or part thereof, or combinations of components or part thereof, such term refers to.

Finally, the term transversal or transversally hereinafter used encompasses a direction non-parallel to the element or direction it is related to, and perpendicularity has to be considered a specific case of transverse direction.

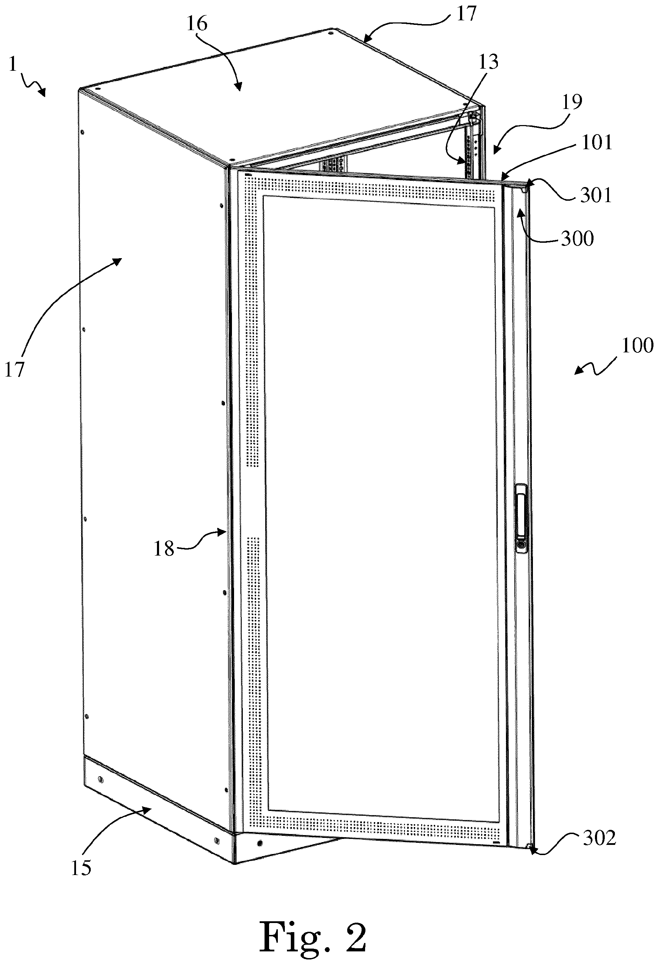

An exemplary embodiment of a cabinet for an electrical switchboard, such as for example a low voltage distribution switchboard, is indicated in figures 2-3 with the overall reference number 1.

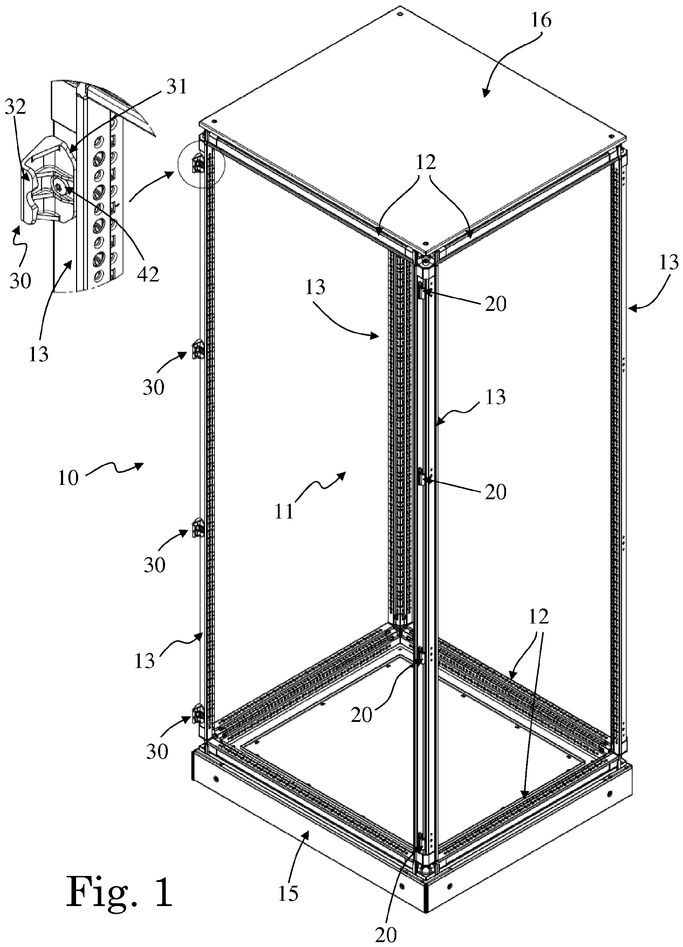

As better visible in figure 1, the cabinet 1 comprises a frame 10 which delimits an internal space of the cabinet (globally indicated with numeral reference 11) for housing one or more electric or electronic elements and/or components of the switchboard.

The frame 10 comprises a structure defined by a plurality of frame members 12-13; for example, the frame 10 illustrated in figure 1 comprises a parallelepiped structure defined by frame members 12 which are arranged substantially horizontally, and by frame members 13 which are arranged substantially vertically and are hereinafter indicated as uprights 13.

With reference to figures 1-3, various components and/or accessories can be operatively connected to the structure realized by the frame members 12-13, such as a lower base 15 for mounting the cabinet 1 on a supporting plane, an upper panel 16, and lateral panels 17 for covering the internal space 11 delimited by the frame 10.

Further, a door 100 is operatively connected to the frame 10 for providing access to the internal space 11 of the cabinet 1; for example, the door 100 is hinged to a corresponding upright 13 of the frame 10 by means of hinging elements connected to the upright 13, such as the hinging elements illustrated for example in figure 1 and indicated with numeral reference 20.

In particular, the door 100 can be operatively connected to the frame 10 according to a first operative position, or according to a second operative position where the door 100 is rotated of an angle of 180° with respect to the first operative position.

In the exemplary embodiment illustrated in figure 2 the door 100 is hinged, according to its first operative position, at a first side 18 of the frame 10, by means of hinging elements 20 connected to the upright 13 positioned at the first side 18.

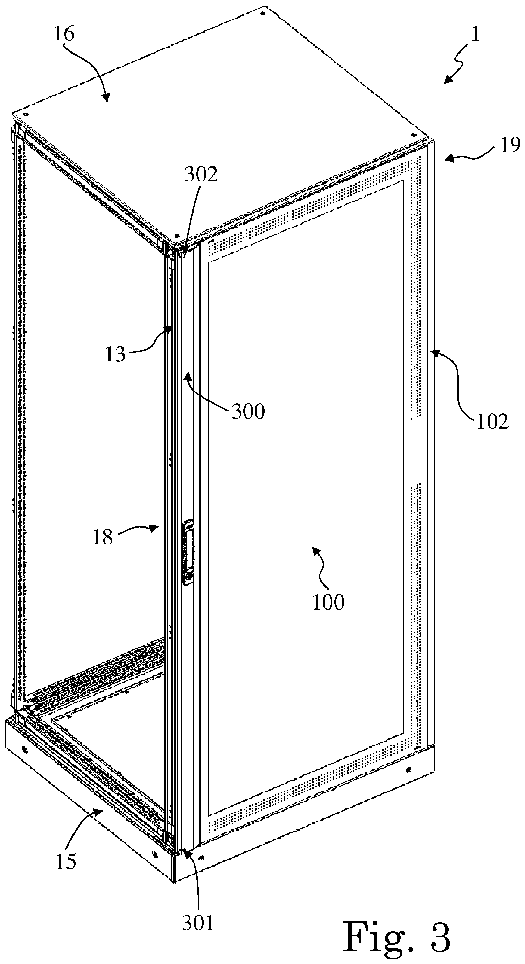

In the exemplary embodiment illustrated in figure 3, the door 100 is hinged, according its second operative position, at a second side 19 of frame 10, by means of hinging elements 20 connected to the upright 13 positioned at the second side 19. In this way, the door 100 in the second operative position is rotated of angle of 180° with respect to the first operative position illustrated in figure 2.

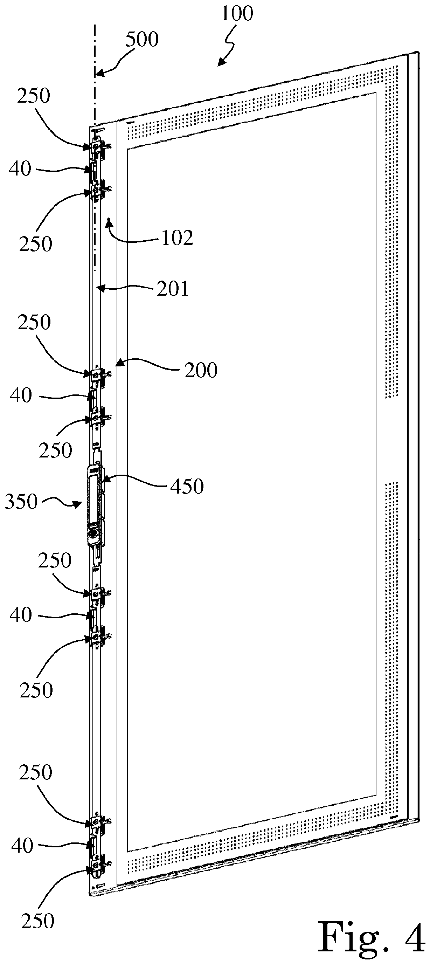

With particular reference to the front and rear perspective views illustrated in figures 4-5, the door 100 according to the present disclosure comprises at least a first, inner, surface 101 facing the internal space 11 of the cabinet 1 when the door 100 is in a closed position (as illustrated for example in figure 3), and a second, outer, surface 102 which is opposed to the inner surface 101 and which faces the external of the cabinet 1.

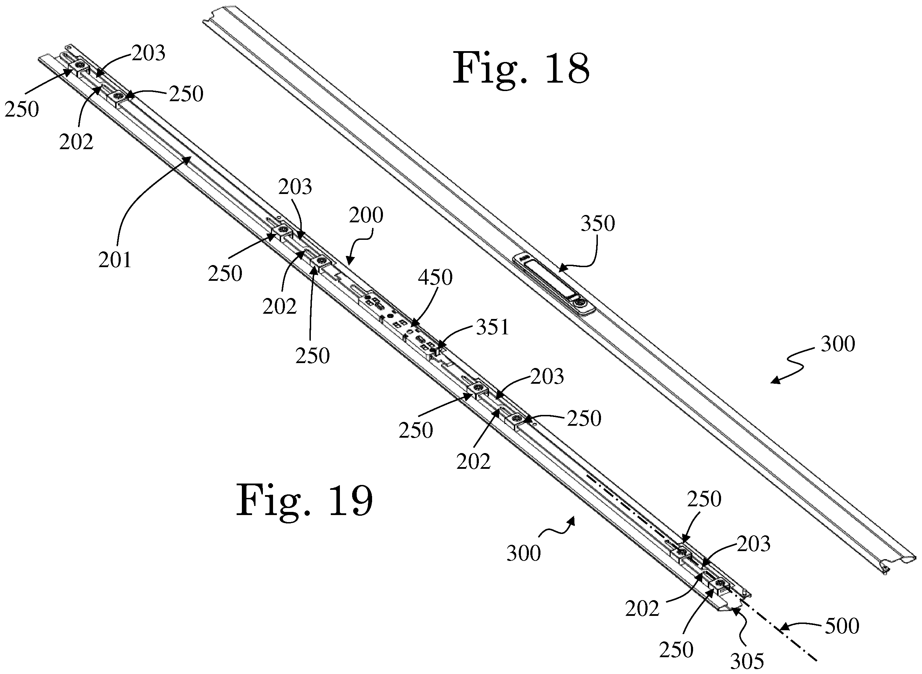

The cabinet 1 according to the present disclosure further comprises one or more locking elements 30 connected to the frame 100, and a mechanism which is globally indicated with numeral reference 200 in figures 4 and 19. The mechanism 200 is adapted to be actuated for operatively interacting with the one or more locking elements 30 and locking the door 100 in the closed position.

In the exemplary embodiment illustrated in figure 1, the cabinet 1 comprises a plurality of locking elements 30 connected to a corresponding upright 13 of the frame 100; in particular, such corresponding upright 13 is aligned with the upright 13 to which the hinging elements 20 are connected. In particular, in figure 1 there are illustrated, only for exemplary purpose, four locking elements 30 connected to the corresponding upright 13.

Advantageously, the one or more locking elements 30 are adapted to pass through the door 100 in the closed position by means of one or more corresponding openings 40 which extend between the inner and outer surfaces 101, 102 of the door 100; the mechanism 200 is operatively coupled to the outer surface 102 for operatively interacting with the one or more locking elements 30 passing through the door 100 and locking the door 100 in the closed position.

In practice, the one or more locking elements 30 pass through the corresponding openings 40 when the door 100 is in the closed position, so as to be accessible by the mechanism 200 which is operatively coupled to the outer surface 102 of the door 100; in this way, the operatively interaction between mechanism 200 and the corresponding one or more locking elements 30 occurs externally to the door 100, at its outer surface 200.

Preferably, as illustrated in the exemplary embodiment of figures 2-3, the cabinet 1 comprises a cover 300 operatively coupled to the outer surface of the door 102 and covering the mechanism 200. The exemplary cover 300 illustrated in figures 2-3 has opposed open ends which are closed by a first cup 301 and a second cup 302, respectively.

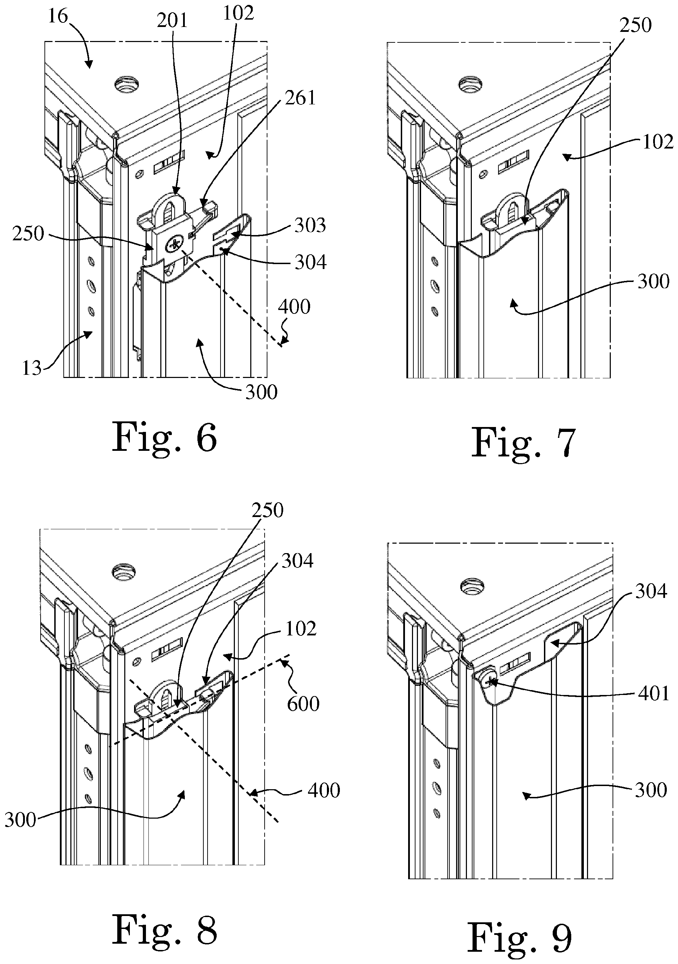

According to a first exemplary embodiment illustrated in figure 4-5 (and related detail figures 6-17), the mechanism 200 is mounted on and connected to the outer surface 102 of the door 100.

According to a second exemplary embodiment illustrated in figures 18-19, the mechanism 200 is mounted within and connected to the cover 300, in such a way that the mechanism 200 is coupled to the outer surface 102 of the door 100 indirectly, through the coupling between the cover 300 and the outer surface 102.

Preferably, according to both the above mentioned first and second exemplary embodiments, the mechanism 200 comprises a movable rod 201 which can be actuated between:
- a first, locking, position where it is adapted to operatively interact with the one or more locking elements 30 passing through closed door 100, for locking the door 100 in the closed position; and
- a second, unlocking, position where it is disengaged from the one or more locking elements 30, for allowing the opening or the closure of the door 100.

Preferably, according to the exemplary embodiments illustrated in figures 4-19, the movable rod 201 can slide between the locking position and the unlocking position, along a reference linear axis which is indicated with numeral reference 500 in figure 4 and in figure 19.

For example, the one or more locking elements 30 are shaped to allow the passage of the movable rod 201 between them and the outer surface 102 of the door 100 in the closed position, wherein the movable rod 201 in the locking position is adapted to abut against a corresponding portion 32 of the one or more locking elements 30 during an attempt to open the door 100.

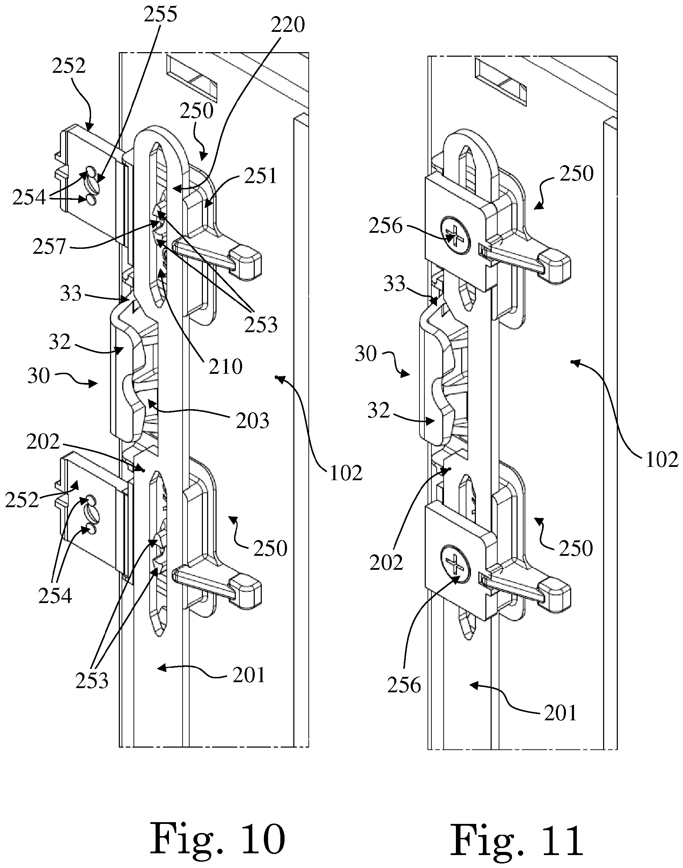

The exemplary locking elements 30 illustrated in figure 1, and also viewable in figures 10-13, comprise a first, lower, end portion 31 which is connected by fixing means 42 to a corresponding portion 13 of the frame 10, such as the illustrated upright 13, and a second, upper, end portion 32 which is spaced from and faced to the portion 13 of the frame 10 where the lower end portion 31 is connected.

Further, with particular reference to the exemplary embodiment illustrated in figures 10-13, the upper end portions 32 of the locking elements 30 are shaped so as to be spaced from the outer surface 102 of the door 100 in the closed position, for allowing the passage of the movable rod 101 between them and the outer surface 102.

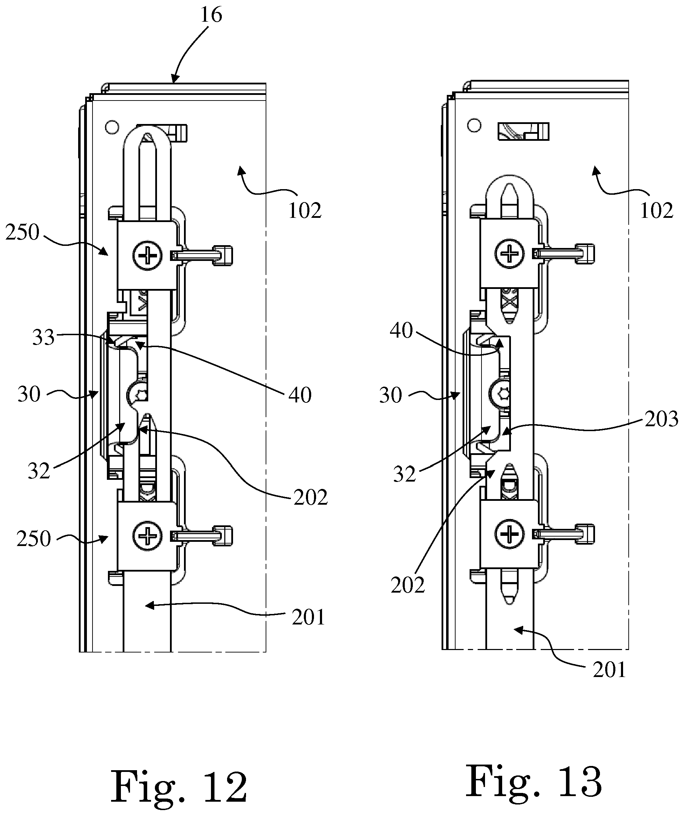

Accordingly, the movable rod 201 comprises tracts 202 which are adapted to be positioned in front of the upper end portions 32 of the locking elements 30, when the movable rod 201 is in the locking position as illustrated for example in figure 12. In practice, when the movable rod 201 is in the locking position, the tracts 202 are inserted below the corresponding upper ends portions 32 of the locking elements 30, so as these tracts 202 can abut against the corresponding upper end portions 32 for blocking an attempt to open the door 101.

The movable rod 201 also comprises open cavities 203 which are defined along its longitudinal extension in such a way to be positioned in front of the upper end portions 32 of the locking elements 30, when the movable rod 201 is in the unlocking position as illustrated for example in figure 10-11 and 13, and in such a way to allow the passage therethrough of the upper end portions 32 during the opening or the closure of the unlocked door 100.

In practice, when the door 100 is closed and the movable rod 201 is in the unlocking position, the open cavities 203 are positioned below the corresponding upper ends portions 32 of the locking elements 30, and they longitudinally extend so as no parts of the movable rod 201 abut against the upper end portions 32 during the opening of the door 100.

Further, when the movable rod 201 is in the unlocking position, the open cavities 203 are positioned above the openings 40, as illustrated for example in figure 13, and they longitudinally extends so as the locking elements 30 are free to pass through the door 100 by means the openings 40 and extend over the outer surface 102, during the closure of the door 100. Preferably, the mechanism 200 according to the present disclosure comprises one or more guiding elements 250 for supporting and allowing the passage therethrough of the movable rod 201.

More preferably, as better illustrated for example in figures 10-11, each of the provided guiding elements 250 advantageously comprises a base portion 251 where a corresponding tract 220 of the rod 201 is inserted movable, and an associated covering portion 252 which is inclinable with respect to the base portion 251 for covering/uncovering the base portion 251 itself. For example, the covering portion 252 is hinged to the base portion 251, so as to be inclinable with respect to it.

In this way, the movable rod 201 can be easily installed in the corresponding guiding elements 250 of the mechanism 200, by first inserting the movable rod 201 into the base portions 251 (when the base portions 251 are uncovered, as illustrated for example in figure 10), and then by covering the base portions 251 with the respective covering portion 252 (as illustrated for example in figure 11).

In the exemplary embodiment illustrated in figures 10-11, one or more first parts 253 of the base portion 251 are inserted in a corresponding slot 210 defined along the movable rod 201, and the covering portion 252 comprises one or more corresponding second parts 254 which are adapted to abut against the one or more first parts 253, when the portion 252 covers the base portion 251. In this way, a screwing operation exerted on the guiding elements 250, for example by coupling a screw 256 to a through hole 255 defined in the covering portion 251 and to a through hole 257 defined between the parts 253, has a limited damaging impact on the guiding element 250 and on the movable rod 201.

Preferably, at least one of the guiding element 250 provided for the movable rod 201 is adapted to slide on a tract 33 of a corresponding locking element 30 during the closure of the door 100, and to reach an operative position at the end of such closure where it is supported by the corresponding locking element 30.

In practice, such at least one guiding element 250 is placed at the opening 40 through which the corresponding locking element 30 passes during the closure of the door 100; in this way, it can slide on the tract 33 of the locking element 30 while it is extending over the corresponding opening 40 during the closure of the door 100.

The sliding of one or more guiding element 250 on the tracts 33 of the corresponding locking elements 30 adjusts the position of the door 100 during the closure, since during the closure the door 100 tends to slope due to its weight.

In the first exemplary embodiment illustrated in figures 4-17, the guiding elements 250 of the mechanism 200 are directly connected to the outer surface 102 of the door 100.

In particular, the exemplary mechanism 200 illustrated in figure 4 comprises four couples of guiding elements 250 which are connected to the outer surface 102, in such a way that the two guiding elements 250 of each couple are disposed at opposed ends of one opening 40.

In this way, the upper guiding element 250 of each couple is adapted to slide on the tract 33 of the corresponding locking elements 30 during the closure of the door 100, until reaching the operative position in which it is placed above and supported by the corresponding locking element 30, as illustrated for example in figures 12-13.

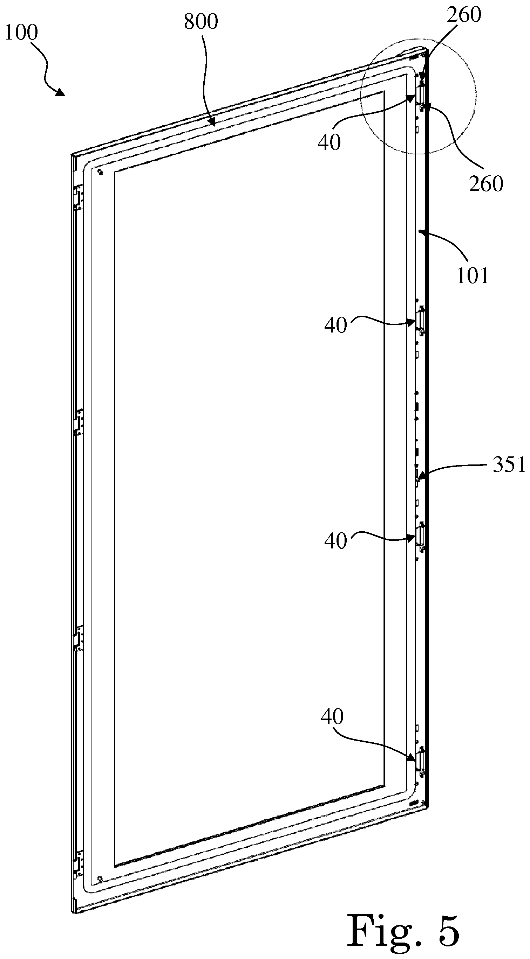

For example, each of the illustrated eight guiding elements 250 comprises a hooking portion 260 which passes through the opening 40, for coupling with the inner surface 101 of the door 100 as illustrated in figure 5.

Preferably, the guiding elements 250 which are directly connected to the outer surface 102 of the door 100 are further adapted to mount the cover 300 on the outer surface 102.

In figures 6-9 there is illustrated for example a mounting sequence of the cover 300 on the outer surface 102, wherein the cover 300 is partially illustrated and has its upper end cut in order to better illustrate its interaction with one of the guiding elements 250.

In particular, the illustrated guiding element 250 comprises an elongated portion 261, and the cover 300 comprises a corresponding open slot 303 defined in a wall 304 and adapted to be crossed by the elongated portion 261. First, the cover 300 is mounted on the outer surface 102 along a linear axis 400 transversal to the outer surface 102, so as the elongate portion 261 passes through the corresponding open slot 303; then, the cover 300 is horizontally translated along the illustrated liner axis 600, transversal with respect to the linear axis 400.

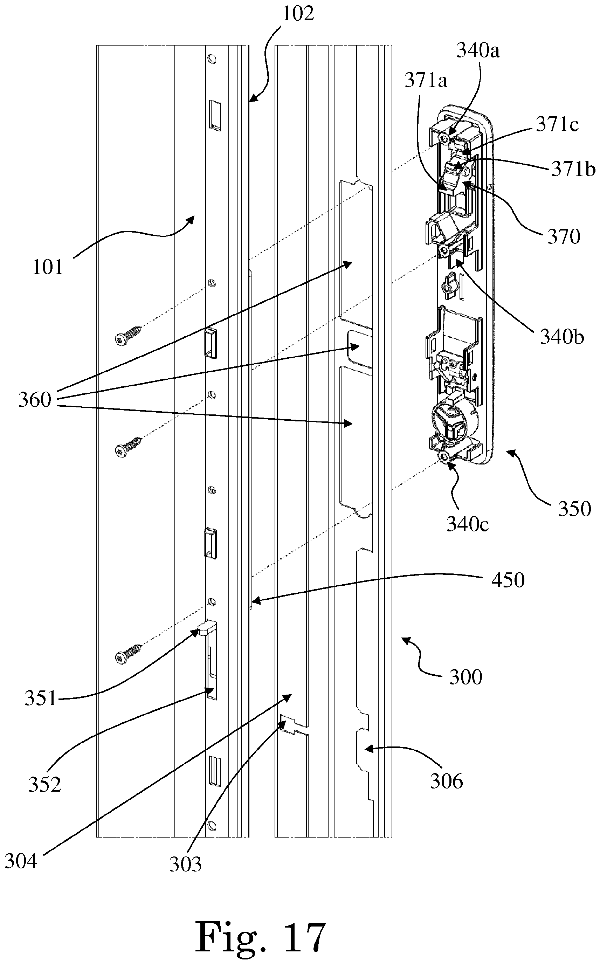

During the translation of the cover 300 along the axis 600, a tract 306 of the cover 300, opposed to the wall 304, is inserted in a space provided between the guiding element 250 and the outer surface 102 of the door 100; an exemplary tract 306 of the cover 300 is better illustrated in figure 17.

Finally, the cover 300 can be fixed to the outer surface 102 of the door 100 by fixing means 401. In the second exemplary embodiment illustrated in figures 18-19, the guiding elements 250 of the mechanism 200 are directly connected to the bottom wall 305 of the cover 300, so as the movable rod 201 passing through such guiding elements 250 is also placed within and operatively connected to the cover 300.

Preferably, the cabinet 1 according to the present disclosure comprises a mounting structure 450 which is operatively connected to the outer surface 102 of the door 100, and which is adapted to be operatively coupled to a handle 350 for actuating the movable rod 201 between the locking position and the unlocking position.

In particular, according to the first exemplary embodiment illustrated in figures 4-17, the mounting structure 450 is connected to the outer surface 102 of the door 100, so as to be positioned between such outer surface 102 and the movable rod 101. In this case, the cover 300 comprises one or more openings 360 for allowing the operative coupling between the handle 350 and the mounting structure 450.

According to the second exemplary embodiment illustrated in figures 18-19, the mounting structure 450 is connected to the cover 300, so as the movable rod 201 is positioned between the mounting structure 450 and the bottom wall 305. In this way, the mounting structure 450 is connected to the outer surface 102 of the door 100 indirectly, through the coupling between the cover 300 and the outer surface 102.

Preferably, the handle 350 and the movable rod 201 are adapted to operatively interact to each other for allowing the operative coupling between the handle 350 and mounting structure 450, when the movable rod 201 is in its locking position.

More preferably, the handle 350 and the movable rod 201 are adapted to operatively interact to each other for allowing the operative coupling between the handle 350 and the mounting structure 450 when the movable rod 201 is in the locking position, independently from the fact that the door 100 is operatively connected to the frame 10 according to the first operative position as illustrated in figure 2 or according to the second operative position as illustrated in figure 3 (where the door 100 is rotated of an angle of 180° with respect to the first operative position).

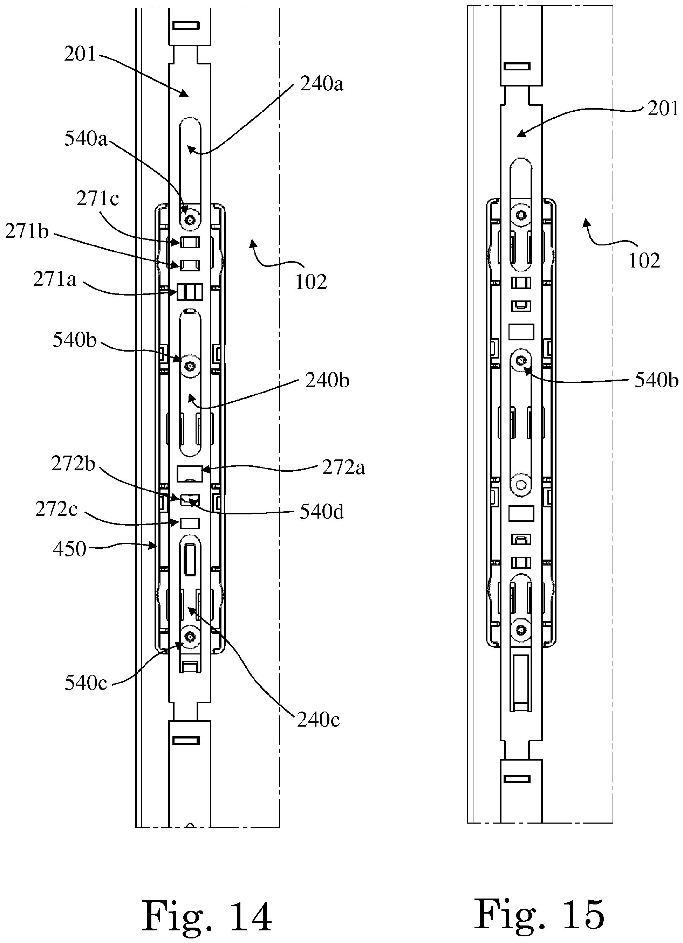

In order to allow the coupling between the handle 350 and the mounting structure 450, a lever 351 can be operatively associated to the movable rod 201 and can be accessible by an operator for moving the rod 201 to the locking position. As illustrated for example in figures 5 and 17, the lever 351 can protrude from a corresponding opening 352 extending between the inner and outer surfaces 101, 102 of the door 100, so as to be accessible by the operator at the inner surface 101. According to the exemplary embodiment illustrated in figures 14-17, one or more slots 240a, 240b, 240c are defined in the movable rod 201 for receiving a corresponding pin 340a, 340b, 340c of the handle 350.

The insertion of the pins 340a, 340b, 340c into the corresponding slots 240a, 240b, 240c allows the coupling between the handle 350 and the mounting structure 450; in particular, at the coupling between the handle 350 and the mounting structure 450, each of the slots 340a, 340b, 340c is in a position suitable for receiving the corresponding pin 340a, 340b, 340c when the movable rod 201 is in the locking position.

This can be better understood by making reference to figure 14, where there is illustrated a tract of the movable rod 201 in the locking position, having three slots 240a, 240b, 240c, and by making also reference to figure 17 where there are illustrated the corresponding three pins 340a, 340b, 340c of the handle 350.

In particular, the three pins 340a, 340b, 340c have to be positioned at corresponding fixing points 540a, 540b, 540c defined in the mounting structure 450. When the movable rod 201 is in the locking position, as illustrated in figure 14, all the fixing points 540a, 540b, 540c are accessible by the pins 340a, 340b, 340c through the slots 240a, 240b, 240c.

Before the coupling between the handle 350 and the mounting structure 450, in case that movable rod 201 is not kept in the locking position, the movable rod 201 will assume a position, not illustrated in the attached figures, where a portion of the movable rod 201 covers the central fixing point 540b. In this way, during an attempt to couple the handle 350 to the mounting structure 450, the pin 340b of the handle 350 would not find the corresponding slot 240b, but it would abut against the tract of the movable rod 201 covering the fixing point 540b.

Each of the slots 240a, 240b, 240c longitudinally extends in such a way to be able for receiving therethrgouh a corresponding pin 340a, 340b, 340c of the handle 350 when the movable rod 201 is in the locking position, independently from the fact the door 100 is operatively connected to the frame 10 according to the first operative position as illustrated in figure 2 or the second operative position as illustrated in figure 3.

This can be better understood by making reference to the exemplary embodiment of figure 14, and assuming that the illustrated situation corresponds to the door 100 in the second operative position as illustrated in figure 3.

When the door 100 is rotated of an angle of 180° for taking the first operative position as illustrated in figure 2, also the whole mechanism 200 and, in particular, the movable rod 201 is subjected to such rotation.

In particular, after such rotation, the slots 240a, 240b, 240c of the movable rod 201 in the locking position are still adapted to receive therethrough the pins 340a-340c of the handle 350, namely the pin 340a can be inserted through the slot 240c for being positioned at the fixing point 540c, the pin 340c can inserted through the slot 240a for being positioned at the fixing point 540a, and the pin 340b can be inserted through the slot 240b for being positioned at a further fixing point 540d defined in the mounting structure 450.

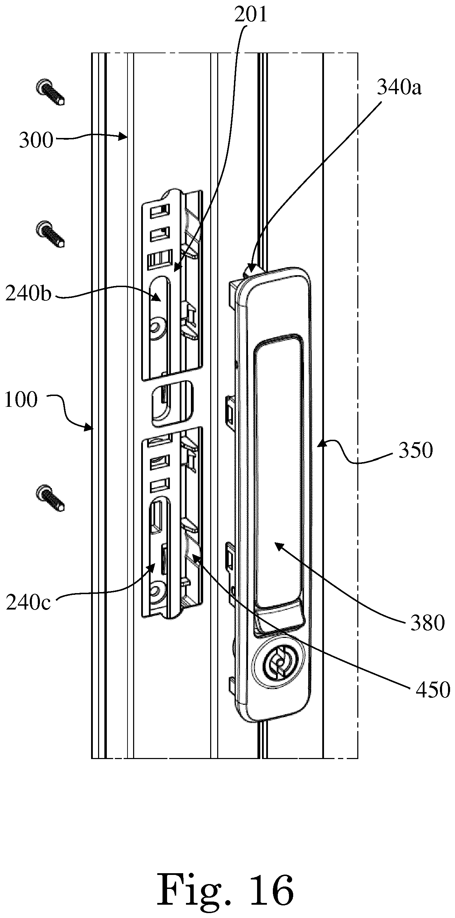

When the door 100 is operatively connected to the frame 10 according to the second operative position, the movable rod 201 in the locking position covers the fixing point 540d, as illustrated in figure 14, so as the handle 350 cannot be wrongly mounted rotated of an angle of 180° with respect to the correct positioning illustrated in figure 16.

When the door 100 is operatively connected to the frame 10 according to the first operative position, the movable rod 201 in the locking position covers the fixing point 540b, so as the handle 350 cannot be wrongly mounted rotated of an angle of 180° with respect to the correct positioning.

According to the exemplary embodiment illustrated in figure 17, the handle 350 comprises a toothed element 370 having a plurality of teeth 371a, 371b, 371c which are adapted to operatively interact with a plurality of holes 271a, 271b, 271c - 272a, 272b, 272c defined in the movable rod 201, for actuating the movable rod 201 between its locking position and unlocking position.

In particular, the handle 350 comprises a lever 380 which can be moved between a lowered position and a raised position for causing a rotation of the toothed element 370 and a consequent mesh of its teeth 371a, 371b, 371 with the plurality of holes 271a, 271b, 271c - 272a, 272b, 272c. With reference to figures 14 and 16, at the coupling between the handle 350 and the mounting structure 450, the lever 380 of the handle 350 is at its lowered position, in such a way that the tooth 371a can be inserted into the corresponding slot 271a of the movable rod 201 in the locking position.

After the coupling between the handle 350 and the mounting structure 450, the actuation of the lever 380 from the lowered position to the raised position is able to cause a rotation of the toothed element 370 and a sequential meshing of the other teeth 371b, 371c with the corresponding holes 271b, 271c. In this way, the movable rod 201 is actuated from the locking position illustrated in figure 14 to the unlocking position illustrated in figure 15, wherein the door 100 is free to be opened and closed.

As disclosed above, it is assumed that the situation illustrated in figure 14 corresponds to the door 100 in the second operative position as illustrated in figure 3. The operative actuation of the movable rod 201 by the handle 350 can occur even if the coupling of the door 100 to the frame 10 is changed, from the second operative position to the first operative position as illustrated in figure 2.

In this case, the movable rod 201 is rotated of an angle of 180° with respect to figure 14 and at the coupling between the handle 350 and the mounting structure 450 the tooth 371a can be inserted into the corresponding slot 272a of the movable rod 201 in the locking position.

After the coupling between the handle 350 and the mounting structure 450, the actuation of the lever 380 from the lowered position to the raised position is able to cause a rotation of the toothed element 370 and a sequential meshing of the other teeth 371b, 371c with the corresponding holes 272b, 272c. Such meshing in turn is able to cause the actuation of the movable rod 201 from the locking position to the unlocking position where the door 100 is free to be opened and closed.

In practice, considering a starting situation where the door 100 is operatively connected to the frame 10 according to the second operative position as illustrated in figure 3 and where the mechanism 200 has already been operatively coupled to outer surface 102 of the door 101, in order to mount the handle 350 on the corresponding mounting structure 450 firstly the operator has to position the movable rod 201 in the locking position, for example by using the lever 351. In this way, with reference to figures 14-17, the slots 240a, 240b, 240c of the movable rod 201 are suitably positioned for receiving the corresponding pins 340a, 340b, 340c of the handle 350, to be positioned at the corresponding fixing points 540a, 540b, 540c.

During the coupling between the handle 350 and the mounting structure 450, the lever 380 of the handle 350 has to be in the lowered position, so as the tooth 371a, dimensioned larger than the other teeth 371b, 371c, can be inserted through the corresponding hole 271a dimensioned larger than the other holes 271b, 271c.

If the operative coupling between the door 100 and the frame 10 is changed from the second operative position to the first operative position as illustrated in figure 2, the operator has to remove the handle 350 from the door 100 and to mount it again according to a correct positioning.

To this aim, firstly the operator has always to position the movable rod 201 in the locking position. In this way, the slots 240a, 240b, 240c of the movable rod 201 are suitably positioned for receiving the corresponding pins 340c, 340b, 340a of the handle 350, to be positioned at the corresponding fixing points 540c, 540d, 540a.

In particular, during the coupling between the handle 350 and the mounting structure 450, the lever 380 of the handle 350 is in the lowered position so as the tooth 371a can be inserted within the corresponding hole 272a dimensioned larger than the other holes 272b, 272c.

After that the coupling between the handle 350 and the mounting structure 450 has occurred, the lever 380 of the handle 350 can be actuated from the lowered position to the raised position, for causing the displacement of the movable rod 201 from the locking position to the unlocking position.

After the actuation of the movable rod 201 to the unlocking position, the door 100 can be closed. With particular reference to the exemplary embodiment illustrated in figures 10-11 and 13, while the movable rod 201 is in the unlocking position its open cavities 203 are positioned in front of the openings 40, in such a way that the locking elements 30 connected to the frame 10 can pass through the door 100 by means of the openings 40, during the closure of the door 100.

A slope of the door 101 is corrected during the closure by the sliding of some of the guiding elements 250 onto tracts 33 of corresponding locking elements 30, until reaching an operative position where they are supported by the corresponding locking elements 30.

At an opening of the unlocked door, there are no parts of the movable rod 201 which would abut against the upper end portions 32 of the locking elements 30, since there are the open cavities 103 positioned below such upper end portions 32.

After that the door 100 is closed, the lever 380 of the handle can be lowered again for causing the sliding of the movable rod 201, from the unlocking position to the locking position.

In this way, tracts 202 of the movable rod 201 are positioned below the upper end portions 32 of the locking elements 30; if the operator attempts to open the door 100 in this situation, the tracts 202 would abut against the corresponding end portion 32, hence blocking the opening of the door 100.

In practice, it has been seen how the cabinet 1 according to the present disclosure allows achieving the intended object offering some improvements over known solutions.

In particular, by having the mechanism 200 operatively coupled to the outer surface 102 of the door 100, with the locking elements 30 passing through the door 100 for being accessible by such mechanism 200 at the outer surface 102, there is no more need of a large space between the frame 10 and the inner surface 101 of the door 100.

This allows reducing the thickness of the door 100, and hence reducing the production costs and waste of space. Further, this allows the use of frame members 12, 13 with in an improved shape in terms of mechanical sturdiness and resistance.

The reduction of the distance between the frame members 12, 13 and the inner surface 101 of the door 100 in the closed position also avoids the use of expensive additional panels fixed internally to the door 100; indeed, the gasket can be placed directly at the inner surface 101 of the door 100, as illustrated for example in figure 4 where the gasket is globally indicated with numeral reference 800.

The operative coupling of the locking mechanism 200 to outer surface 102 of the door 101 is particularly easy and fast.

In particular, when the mechanism 200 is directly connected to the outer surface 102 according to the exemplary embodiment illustrated in figure 4, the above disclosed guiding elements 250 are devised not only to allow an easily coupling with the movable rod 201, but also to mount the cover 300 on the outer surface 102 and/or to correct to slope of the door 100 during the closure.

According to the exemplary embodiment illustrated in figures 18-19, the mechanism 200 is premounted on the cover 300, so as the mechanism 200 is operatively coupled to the outer surface 200 of the door 100 and is ready to operatively interact with the locking elements 30 simply by coupling the cover 300 to the outer surface 202.

Further, the above disclosed mounting of the handle 350 on the corresponding structure 450 as is fast, easy and intuitive for an operator, reducing the possibilities of installation errors.

Finally, the handle 350 can be installed for actuating the movable rod 201, independently from the specific operative position in which the door 100 is hinged to the frame 10.

The cabinet 1 thus conceived, and related electrical switchboard, are also susceptible of modifications and variations, all of which are within the scope of the inventive concept as defined in particular by the appended claims.

For example, even if in the exemplary embodiment of figure 1 there are illustrated four locking elements 30, the number of the locking elements 30(as well as of the corresponding openings 40 in the door 100) can be different to the illustrated one.

Even if in the attached figures there are illustrated eight guiding elements 250, the number of guiding elements 250 provided for the movable rod 201 can be different to the illustrated one. Moreover, all parts/components can be replaced with other technically equivalent elements; in practice, the type of materials, and the dimensions, can be any according to needs and to the state of the art.

## Claims

1. A cabinet (1) for an electrical switchboard, comprising:
- a frame (10) delimiting an internal space (11) of the cabinet (1);
- a door (100) operatively connected to said frame (10), said door (100) having a first surface (101) facing said internal space (11) when the door (100) is in a closed position, and a second surface (102) opposed to said first surface (101) and facing the external of the cabinet (1);
- at least one locking element (30) connected to the frame (10), said at least one locking element (30) being adapted to pass through the door (100) in the closed position by means of a corresponding opening (40) extending between the first surface (101) and the second surface (102);
- a mechanism (200) which is adapted to be actuated for operatively interacting with said at least one locking element (30) and locking the door (100) in the closed position, said mechanism (200) being operatively coupled to said second surface (102) for operatively interacting with said at least one locking element (30) when the door (100) is in the closed position;
wherein
said mechanism (200) comprises a movable rod (201) which can be actuated between a locking position where the movable rod (201) is adapted to operatively interact with said at least one locking element (30) for locking the door (100) in the closed position, and an unlocking position where the movable rod (201) is disengaged from said at least one locking element (30), **characterized**
**in that** the cabinet comprises a mounting structure (450)
which is operatively connected to said second surface (102) and which is adapted to be operatively coupled to a handle (350) for actuating the movable rod (201) between the locking position and the unlocking position.

2. The cabinet (1) according to claim 1, wherein said at least one locking element (30) is shaped so as to allow the passage of said movable rod (201) between the locking element (30) and the second surface (102) of the door (100) in the closed position, and wherein the movable rod (201) in the locking position is adapted to abut against a corresponding portion (32) of said at least one locking element (30) during an attempt to open the door (100).

3. The cabinet (1) according to claim 2, wherein said at least one locking element (30) comprises a first end portion (31) which is connected to a corresponding portion (13) of the frame (10), and a second end portion (32) which is spaced from and faced to said corresponding portion (13) of the frame (10), said second end portion (32) being spaced from said second surface (102) when the door (100) is in the closed position for allowing the passage of said movable rod (201) between the second surface (102) and the second end portion (32), and said movable rod (201) having at least:
- a tract (202) which is positioned in front of said second end portion (32), when the movable rod (201) is in the locking position; and
- an open cavity (203) which is defined along the longitudinal extension of the movable rod (201) in such a way to be positioned in front of said second end portion (32), when the movable rod (201) is in the unlocking position, and in such a way to allow the passage therethrough of said second end portion (32).

4. The cabinet (1) according to one or more of the preceding claims 1-3, wherein said mechanism (200) comprises at least one guiding element (250) for supporting and allowing the passage therethrough of said movable rod (201).

5. The cabinet (1) according to claim 4, wherein said at least one guiding element (250) comprises a base portion (251) into which a corresponding tract (220) of the movable rod (201) is movable inserted, and an associated covering portion (252) inclinable with respect to said base portion (251).

6. The cabinet (1) according to claim 4 or claim 5, wherein said at least one locking element and said at least one guiding element comprise at least a first locking element (30) and a first guiding element (250), respectively, wherein said first guiding element (250) is adapted to slide on a tract (33) of said first locking element (30) during the closure of the door (100) and reach an operative position at the end of said closure where it is supported by said first locking element (30).

7. The cabinet (1) according to one or more of the preceding claims 1-6, wherein said movable rod (201) and said handle (350) are adapted to operatively interact to each other for allowing said operative coupling between the handle (350) and the mounting structure (450) when the movable rod (201) is in the locking position.

8. The cabinet (1) according to claim 7, comprising a lever (351) which is operatively associated to said movable rod (201) and accessible by an operator for moving the movable rod (201) to the locking position.

9. The cabinet (1) according to claim 7 or claim 8, wherein one or more slots (240a, 240b, 240c) are defined in said movable rod (201) for receiving a corresponding pin (340a, 340b, 340c) of the handle (350), and wherein at the coupling between the handle (350) and the mounting structure (450) each of said one or more slots (240a, 240b, 240c) is in a position for receiving the corresponding pin (340a, 340b, 340c) when the movable rod (201) is in the locking position.

10. The cabinet (1) according to one or more of claims 7-9, wherein said handle (350) comprises a toothed element (370) adapted to operatively interact with a plurality of holes (271a, 271b, 271c; 272am 272b, 272c) defined in said movable rod (201), for actuating the movable rod (201) between the locking position and the unlocking position.

11. The cabinet (1) according to one or more of claims 7-10, wherein said movable rod (201) and said handle (350) are adapted to operatively interact to each other for allowing said operative coupling between the handle (350) and the mounting structure (450), independently from the fact that the door (100) is operatively connected to the frame (10) according to a first operative position or according to a second operative position where the door (100) is rotated of an angle of 180° with respect to said first operative position.

12. The cabinet (1) according to claim 11, wherein:
- each of said one or more slots (240a, 240b, 240c) longitudinally extends in such a way to be able to receive the corresponding pin (340a, 340b, 340c) of the handle (350) when the movable rod (201) is in the locking position, independently from the fact the door (100) is operatively connected to the frame (10) according to the first operative position or the second operative position;
- said plurality of holes comprises a plurality of first holes (271a, 271b, 271c) and a plurality of second holes (272a, 272b, 272c); and
- said toothed element (370) is adapted to operatively interact with said plurality of first holes (271a, 271b, 271c) when the door (100) is operatively connected to the frame (10) according to said second operative position, and to operatively interact with said plurality of second hole (272a, 272b, 272c) when the door (100) is operatively connected to the frame (10) according to said first operative position.

13. The cabinet (1) according to one or more of the preceding claims, comprising a cover (300) operatively coupled to said second surface (102) of the door (100) and covering said mechanism (200).

14. The cabinet (1) according to claim 13, wherein said mechanism (200) is mounted within and connected to the cover (300).

15. The cabinet (1) according to one or more of claims 1-13, wherein said mechanism (200) is mounted on and connected to said second surface (102).

16. The cabinet (1) according to claim 15, wherein said at least one guiding element (250) is connected to said second surface (102) and is adapted to mount said cover (300) on said second surface (102).

17. An electrical switchboard comprising a cabinet (1) according to one or more of claims 1-16.

## Patentansprüche

1. Schrank (1) für eine elektrische Schaltanlage, umfassend:
- einen Rahmen (10), der einen Innenraum (11) des Schrankes (1) begrenzt;
- eine Tür (100), die betriebsmäßig mit dem Rahmen (10) verbunden ist, wobei die Tür (100) eine erste Oberfläche (101), die dem Innenraum (11) zugewandt ist, wenn sich die Tür (100) in einer geschlossenen Position befindet, und eine zweite Oberfläche (102) aufweist, die der ersten Oberfläche (101) gegenüberliegt und der Außenseite des Schrankes (1) zugewandt ist;
- mindestens ein Verriegelungselement (30), das mit dem Rahmen (10) verbunden ist, wobei das mindestens eine Verriegelungselement (30) angepasst ist, um durch die Tür (100) in der geschlossenen Position mittels einer entsprechenden Öffnung (40), die sich zwischen der ersten Oberfläche (101) und der zweiten Oberfläche (102) erstreckt, zu gelangen;
- einen Mechanismus (200), der angepasst ist, um für ein betriebsmäßiges Zusammenwirken mit dem mindestens einen Verriegelungselement (30) und zum Verriegeln der Tür (100) in der geschlossenen Position betätigt zu werden, wobei der Mechanismus (200) betriebsmäßig mit der zweiten Oberfläche (102) gekoppelt ist, um mit dem mindestens einen Verriegelungselement (30) betriebsmäßig zusammenzuwirken, wenn sich die Tür (100) in der geschlossenen Position befindet;
wobei der Mechanismus (200) eine bewegliche Stange (201) umfasst, die zwischen einer Verriegelungsposition, in der die bewegliche Stange (201) angepasst ist, um mit dem mindestens einen Verriegelungselement (30) betriebsmäßig zusammenzuwirken, um die Tür (100) in der geschlossenen Position zu verriegeln, und einer Entriegelungsposition, in der die bewegliche Stange (201) von dem mindestens einen Verriegelungselement (30) gelöst ist, betätigt werden kann, **dadurch gekennzeichnet, dass** der Schrank eine Montagestruktur (450) umfasst, die betriebsmäßig mit der zweiten Oberfläche (102) verbunden ist und die angepasst ist, um betriebsmäßig mit einem Handgriff (350) zum Betätigen der beweglichen Stange (201) zwischen der Verriegelungsposition und der Entriegelungsposition gekoppelt zu werden.

2. Schrank (1) nach Anspruch 1, wobei das mindestens eine Verriegelungselement (30) geformt ist, um den Durchgang der beweglichen Stange (201) zwischen dem Verriegelungselement (30) und der zweiten Oberfläche (102) der Tür (100) in der geschlossenen Position zu ermöglichen, und wobei die bewegliche Stange (201) in der Verriegelungsposition angepasst ist, um während eines Versuchs, die Tür (100) zu öffnen, an einem entsprechenden Abschnitt (32) des mindestens einen Verriegelungselements (30) anzuliegen.

3. Schrank (1) nach Anspruch 2, wobei das mindestens eine Verriegelungselement (30) einen ersten Endabschnitt (31), der mit einem entsprechenden Abschnitt (13) des Rahmens (10) verbunden ist, und einen zweiten Endabschnitt (32), der von dem entsprechenden Abschnitt (13) des Rahmens (10) beabstandet und diesem zugewandt ist, umfasst, wobei der zweite Endabschnitt (32) von der zweiten Oberfläche (102) beabstandet ist, wenn sich die Tür (100) in der geschlossenen Position befindet, um den Durchgang der beweglichen Stange (201) zwischen der zweiten Oberfläche (102) und dem zweiten Endabschnitt (32) zu ermöglichen, und die bewegliche Stange (201) mindestens aufweist:
- einen Teil (202), der vor dem zweiten Endabschnitt (32) positioniert ist, wenn sich die bewegliche Stange (201) in der Verriegelungsposition befindet; und
- einen offenen Hohlraum (203), der entlang der Längserstreckung der beweglichen Stange (201) so definiert ist, dass er vor dem zweiten Endabschnitt (32) positioniert werden kann, wenn sich die bewegliche Stange (201) in der Entriegelungsposition befindet, und so, dass er den Durchgang des zweiten Endabschnitts (32) dort hindurch ermöglicht.

4. Schrank (1) nach einem oder mehreren der vorstehenden Ansprüche 1-3, wobei der Mechanismus (200) mindestens ein Führungselement (250) zum Tragen und Ermöglichen des Durchgangs der beweglichen Stange (201) dort hindurch umfasst.

5. Schrank (1) nach Anspruch 4, wobei das mindestens eine Führungselement (250) einen Basisabschnitt (251), in dem ein entsprechender Teil (220) der beweglichen Stange (201) beweglich eingefügt ist, und einen zugehörigen Abdeckabschnitt (252), der in Bezug auf den Basisabschnitt (251) neigbar ist, umfasst.

6. Schrank (1) nach Anspruch 4 oder Anspruch 5, wobei das mindestens eine Verriegelungselement und das mindestens eine Führungselement mindestens ein erstes Verriegelungselement (30) beziehungsweise ein erstes Führungselement (250) umfassen, wobei das erste Führungselement (250) angepasst ist, um während des Schließens der Tür (100) auf einem Teil (33) des ersten Verriegelungselements (30) zu gleiten und eine Betriebsposition am Ende des Verschlusses zu erreichen, wo es von dem ersten Verriegelungselement (30) getragen wird.

7. Schrank (1) nach einem oder mehreren der vorstehenden Ansprüche 1-6, wobei die bewegliche Stange (201) und der Handgriff (350) angepasst sind, um betriebsmäßig miteinander zusammenzuwirken, um die betriebsmäßige Kopplung zwischen dem Handgriff (350) und der Montagestruktur (450) zu ermöglichen, wenn sich die bewegliche Stange (201) in der Verriegelungsposition befindet.

8. Schrank (1) nach Anspruch 7, umfassend einen Hebel (351), der der beweglichen Stange (201) betriebsmäßig zugeordnet und einem Bediener zugänglich ist, um die bewegliche Stange (201) in die Verriegelungsposition zu bewegen.

9. Schrank (1) nach Anspruch 7 oder Anspruch 8, wobei ein oder mehrere Schlitze (240a, 240b, 240c) in der beweglichen Stange (201) definiert sind, um einen entsprechenden Stift (340a, 340b, 340c) des Handgriffs (350) aufzunehmen, und wobei sich bei der Kopplung zwischen dem Handgriff (350) und der Montagestruktur (450) jeder von dem einen oder den mehreren Schlitzen (240a, 240b, 240c) in einer Position zur Aufnahme des entsprechenden Stiftes (340a, 340b, 340c) befindet, wenn sich die bewegliche Stange (201) in der Verriegelungsposition befindet.

10. Schrank (1) nach einem oder mehreren der Ansprüche 7-9, wobei der Handgriff (350) ein gezahntes Element (370) umfasst, das angepasst ist, um betriebsmäßig mit einer Vielzahl von Löchern (271a, 271b, 271c; 272am 272b, 272c), die in der beweglichen Stange (201) definiert sind, zusammenzuwirken, um die bewegliche Stange (201) zwischen der Verriegelungsposition und der Entriegelungsposition zu betätigen.

11. Schrank (1) nach einem oder mehreren der Ansprüche 7-10, wobei die bewegliche Stange (201) und der Handgriff (350) angepasst sind, um betriebsmäßig miteinander zusammenzuwirken, um die betriebsmäßige Kopplung zwischen dem Handgriff (350) und der Montagestruktur (450) zu ermöglichen, unabhängig von der Tatsache, dass die Tür (100) betriebsmäßig mit dem Rahmen (10) gemäß einer ersten Betriebsposition oder gemäß einer zweiten Betriebsposition, in der die Tür (100) um einen Winkel von 180° in Bezug auf die erste Betriebsposition gedreht ist, verbunden ist.

12. Schrank (1) nach Anspruch 11, wobei:
- sich jeder von dem einen oder den mehreren Schlitzen (240a, 240b, 240c) so in Längsrichtung erstreckt, dass er in der Lage ist, den entsprechenden Stift (340a, 340b, 340c) des Handgriffs (350) aufzunehmen, wenn sich die bewegliche Stange (201) in der Verriegelungsposition befindet, unabhängig von der Tatsache, dass die Tür (100) gemäß der ersten Betriebsposition oder der zweiten Betriebsposition betriebsmäßig mit dem Rahmen (10) verbunden ist;
- die Vielzahl von Löchern eine Vielzahl von ersten Löchern (271a, 271b, 271c) und eine Vielzahl von zweiten Löchern (272a, 272b, 272c) umfasst; und
- das gezahnte Element (370) angepasst ist, um betriebsmäßig mit der Vielzahl von ersten Löchern (271a, 271b, 271c) zusammenzuwirken, wenn die Tür (100) betriebsmäßig mit dem Rahmen (10) gemäß der zweiten Betriebsposition verbunden ist, und betriebsmäßig mit der Vielzahl von zweiten Löchern (272a, 272b, 272c) zusammenzuwirken, wenn die Tür (100) betriebsmäßig mit dem Rahmen (10) gemäß der ersten Betriebsposition verbunden ist.

13. Schrank (1) nach einem oder mehreren der vorstehenden Ansprüche, umfassend eine Abdeckung (300), die mit der zweiten Oberfläche (102) der Tür (100) betriebsmäßig gekoppelt ist und den Mechanismus (200) abdeckt.

14. Schrank (1) nach Anspruch 13, wobei der Mechanismus (200) innerhalb der Abdeckung (300) montiert und mit dieser verbunden ist.

15. Schrank (1) nach einem oder mehreren der Ansprüche 1-13, wobei der Mechanismus (200) an der zweiten Oberfläche (102) montiert und mit dieser verbunden ist.

16. Schrank (1) nach Anspruch 15, wobei das mindestens eine Führungselement (250) mit der zweiten Oberfläche (102) verbunden ist und angepasst ist, um die Abdeckung (300) an der zweiten Oberfläche (102) zu montieren.

17. Elektrische Schaltanlage umfassend einen Schrank (1) nach einem oder mehreren der Ansprüche 1-16.

## Revendications

1. Armoire (1) pour tableau électrique comprenant :
- un cadre (10) délimitant un espace interne (11) de l'armoire (1) ;
- une porte (100) reliée de manière opérationnelle audit cadre (10), ladite porte (100) ayant une première surface (101) faisant face audit espace interne (11) lorsque la porte (100) est dans une position fermée, et une seconde surface (102) opposée à ladite première surface (101) et faisant face à l'extérieur de l'armoire (1) ;
- au moins un élément de verrouillage (30) relié au cadre (10), ledit au moins un élément de verrouillage (30) étant adapté pour passer à travers la porte (100) dans la position fermée au moyen d'une ouverture correspondante (40) s'étendant entre la première surface (101) et la seconde surface (102) ;
- un mécanisme (200) qui est adapté pour être actionné afin d'interagir de manière opérationnelle avec ledit au moins un élément de verrouillage (30) et de verrouiller la porte (100) dans la position fermée, ledit mécanisme (200) étant couplé de manière opérationnelle à ladite seconde surface (102) pour interagir de manière opérationnelle avec ledit au moins un élément de verrouillage (30) lorsque la porte (100) est dans la position fermée ;
dans lequel ledit mécanisme (200) comprend une tige mobile (201) qui peut être actionnée entre une position de verrouillage dans laquelle la tige mobile (201) est adaptée pour interagir de manière opérationnelle avec ledit au moins un élément de verrouillage (30) afin de verrouiller la porte (100) dans la position fermée, et une position de déverrouillage dans laquelle la tige mobile (201) est libérée dudit au moins un élément de verrouillage (30), **caractérisée en ce que** l'armoire comprend une structure de montage (450) qui est reliée de manière opérationnelle à ladite seconde surface (102) et qui est adaptée pour être couplée de manière opérationnelle à une poignée (350) pour actionner la tige mobile (201) entre la position de verrouillage et la position de déverrouillage.

2. Armoire (1) selon la revendication 1, dans laquelle ledit au moins un élément de verrouillage (30) est mis en forme de manière à permettre le passage de ladite tige mobile (201) entre l'élément de verrouillage (30) et la seconde surface (102) de la porte (100) dans la position fermée, et dans laquelle la tige mobile (201) dans la position de verrouillage est adaptée pour venir en butée contre une partie correspondante (32) dudit au moins un élément de verrouillage (30) lors d'une tentative d'ouverture de la porte (100).

3. Armoire (1) selon la revendication 2, dans laquelle ledit au moins un élément de verrouillage (30) comprend une première partie d'extrémité (31) qui est reliée à une partie correspondante (13) du cadre (10), et une seconde partie d'extrémité (32) qui est espacée de ladite partie correspondante (13) du cadre (10) et en regard de celle-ci, ladite seconde partie d'extrémité (32) étant espacée de ladite seconde surface (102) lorsque la porte (100) est dans la position fermée pour permettre le passage de ladite tige mobile (201) entre la seconde surface (102) et la seconde partie d'extrémité (32), et ladite tige mobile (201) ayant au moins :
- une piste (202) qui est positionnée devant ladite seconde partie d'extrémité (32), lorsque la tige mobile (201) est dans la position de verrouillage ; et
- une cavité ouverte (203) qui est définie le long de l'extension longitudinale de la tige mobile (201) de manière à être positionnée devant ladite seconde partie d'extrémité (32), lorsque la tige mobile (201) est dans le déverrouillage position, et de manière à permettre le passage de ladite seconde partie d'extrémité (32).

4. Armoire (1) selon une ou plusieurs des revendications précédentes 1-3, dans laquelle ledit mécanisme (200) comprend au moins un élément de guidage (250) destiné à supporter et à permettre le passage de ladite tige mobile (201) à travers celui-ci.

5. Armoire (1) selon la revendication 4, dans laquelle ledit au moins un élément de guidage (250) comprend une partie de base (251) dans laquelle est insérée une piste correspondante (220) de la tige mobile (201), et une partie de recouvrement associée (252) pouvant être inclinée par rapport à ladite partie de base (251).

6. Armoire (1) selon la revendication 4 ou la revendication 5, dans laquelle ledit au moins un élément de verrouillage et ledit au moins un élément de guidage comprennent respectivement au moins un premier élément de verrouillage (30) et un premier élément de guidage (250), dans laquelle ledit premier élément de guidage (250) est adapté pour coulisser sur une piste (33) dudit premier élément de verrouillage (30) pendant la fermeture de la porte (100) et atteindre une position fonctionnelle à l'extrémité de ladite fermeture dans laquelle il est supporté par ledit premier élément de verrouillage (30).

7. Armoire (1) selon une ou plusieurs des revendications précédentes 1-6, dans laquelle ladite tige mobile (201) et ladite poignée (350) sont adaptées pour interagir de manière opérationnelle l'une avec l'autre afin de permettre ledit couplage opérationnel entre la poignée (350) et la structure de montage (450) lorsque la tige mobile (201) est dans la position de verrouillage.

8. Armoire (1) selon la revendication 7, comprenant un levier (351) qui est associé de manière opérationnelle à ladite tige mobile (201) et accessible à un opérateur pour déplacer la tige mobile (201) vers la position de verrouillage.

9. Armoire (1) selon la revendication 7 ou la revendication 8, dans laquelle une ou plusieurs fentes (240a, 240b, 240c) sont définies dans ladite tige mobile (201) pour recevoir une broche correspondante (340a, 340b, 340c) de la poignée (350), et dans laquelle, au niveau du couplage entre la poignée (350) et la structure de montage (450), chacune desdites une ou plusieurs fentes (240a, 240b, 240c) est dans une position permettant de recevoir la broche correspondante (340a, 340b, 340c) lorsque la tige mobile (201) est dans la position de verrouillage.

10. Armoire (1) selon une ou plusieurs des revendications 7-9, dans laquelle ladite poignée (350) comprend un élément denté (370) adapté pour interagir de manière opérationnelle avec une pluralité de trous (271a, 271b, 271c ; 272am 272b, 272c) définis dans ladite tige mobile (201), pour actionner la tige mobile (201) entre la position de verrouillage et la position de déverrouillage.

11. Armoire (1) selon une ou plusieurs des revendications 7-10, dans laquelle ladite tige mobile (201) et ladite poignée (350) sont adaptées pour interagir de manière opérationnelle l'une avec l'autre afin de permettre ledit couplage opérationnel entre la poignée (350) et la structure de montage (450), indépendamment du fait que la porte (100) est reliée de manière opérationnelle au cadre (10) selon une première position opérationnelle ou selon une seconde position opérationnelle où la porte (100) est tournée sur un angle de 180° par rapport à ladite première position opérationnelle.

12. Armoire (1) selon la revendication 11, dans laquelle :
- chacune desdites une ou plusieurs fentes (240a, 240b, 240c) s'étend longitudinalement de manière à pouvoir recevoir la broche correspondante (340a, 340b, 340c) de la poignée (350) lorsque la tige mobile (201) est dans la position de verrouillage, indépendamment du fait que la porte (100) est reliée de manière opérationnelle au cadre (10) selon la première position opérationnelle ou la seconde position opérationnelle ;
- ladite pluralité de trous comprend une pluralité de premiers trous (271a, 271b, 271c) et une pluralité de seconds trous (272a, 272b, 272c) ; et
- ledit élément denté (370) est adapté pour interagir de manière opérationnelle avec ladite pluralité de premiers trous (271a, 271b, 271c) lorsque la porte (100) est reliée de manière opérationnelle au cadre (10) selon ladite seconde position fonctionnelle, et pour interagir de manière opérationnelle avec ladite pluralité de seconds trous (272a, 272b, 272c) lorsque la porte (100) est reliée de manière opérationnelle au cadre (10) selon ladite première position opérationnelle.

13. Armoire (1) selon une ou plusieurs des revendications précédentes, comprenant un couvercle (300) couplé de manière opérationnelle à ladite seconde surface (102) de la porte (100) et recouvrant ledit mécanisme (200).

14. Armoire (1) selon la revendication 13, dans laquelle ledit mécanisme (200) est monté à l'intérieur et relié au couvercle (300).

15. Armoire (1) selon une ou plusieurs des revendications 1-13, dans laquelle ledit mécanisme (200) est monté sur et relié à ladite seconde surface (102).

16. Armoire (1) selon la revendication 15, dans laquelle ledit au moins un élément de guidage (250) est relié à ladite seconde surface (102) et est adapté pour monter ledit couvercle (300) sur ladite seconde surface (102).

17. Tableau électrique comprenant une armoire (1) selon une ou plusieurs des revendications 1-16.
